# EUROPEAN PATENT SPECIFICATION

(11) **EP 2 709 313 B1**
(45) Date of publication and mention of the grant of the patent: **19.06.2019**
(21) Application number: 12782009.0
(22) Date of filing: 25.04.2012
(51) Int. Cl.: H04L 12/28

(54) **MULTIPORT ETHERNET INTERFACE DEVICE AND METHOD FOR IDENTIFYING PORTS THEREOF**
ETHERNET-SCHNITTSTELLENVORRICHTUNG MIT MEHREREN ANSCHLÜSSEN UND VERFAHREN ZUR ZUGANGSIDENTIFIKATION DAFÜR
DISPOSITIF D'INTERFACE ETHERNET MULTIPORT ET PROCÉDÉ POUR IDENTIFIER LES PORTS DUDIT DISPOSITIF

(30) Priority: 10.05.2011 CN 201110120010
(43) Date of publication of application: 19.03.2014
(73) Proprietor: ZTE Corporation, Shenzhen, Guangdong 518057 (CN)
(72) Inventor: WANG, Jisheng, Shenzhen, Guangdong 518057 (CN)
(74) Representative: J A Kemp
(86) International application number: PCT/CN2012/074658
(87) International publication number: WO 2012/152184

(56) References cited:
- CN-A- 101 374 046
- CN-A- 101 404 645
- CN-A- 101 610 216
- CN-A- 102 006 173
- CN-A- 102 185 775
- RADIA PERLMAN INTEL LABS DONALD EASTLAKE 3RD STELLAR SWITCHES DINESH G DUTT SILVANO GAI CISCO SYSTEMS ANOOP GHANWANI BROCADE: "RBridges: Base Protocol Specification; draft-ietf-trill-rbridge-protocol-16.txt", RBRIDGES: BASE PROTOCOL SPECIFICATION; DRAFT-IETF-TRILL-RBRIDGE-PROTOCOL-16.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 16, 5 March 2010 (2010-03-05), pages 1-117, XP015067710, [retrieved on 2010-03-05]

## Description

The disclosure relates to the field of communications, and more particularly to a multi-port Ethernet interface device and a method for identifying ports thereof.

As a core device of a core network or an access network, the performance of a middle or high-end switch or router partially depends upon the switch capacity thereof, which constitutes one of the major indexes determining the performance of the switch or router, in order to meet the requirement on switch capacity, device suppliers usually select switch chips having a port bandwidth of 1GE or 10GE or a Network Processor (NP), which leads to a problem of a severe switch capacity and bandwidth waste when such a device is required to be connected with a low-end Ethernet switch, for example, the bandwidth is negotiated to be 100M when a high-end switch or router is connected with a 100M port of a low-end switch as the 1 G port of the high-end switch or router can only be connected with the 100M port of the low-end switch.

The use of a multi-port Ethernet interface device is a good choice to address the problem of bandwidth waste without impairing the switch capacity of a device, a plurality of 100M Ethernet ports may correspond to one 1GE port of a switch chip or the NP or a plurality of 1GE ports correspond to one 10GE port of a switch chip or the NP, and so on and so forth. However, this solution causes a problem that a switch chip or an NP, which is incapable of identifying the ports of the multi-port Ethernet interface device, cannot determine from which port of the multi-port Ethernet interface device a service is transmitted or inform the multi-port Ethernet interface device of the port from which a service should be transmitted.

Radia Perlman, Intel Labs, Donald Eastlake 3^{rd}, Stellar Switches, Dinesh G. Dutt, Silvano Gai, Cisco Sytems, Anoop Ghanwani, Brocade: "RBridges: Base Protocol Specification <draft-ietf-trill-rbridge-protocol-16.txt>"; TRILL Working Group; INTERNET-DRAFT discloses VLAN mapping within a link. RBridges include the Outer.VLAN ID inside every TRILL-HELLO message. When a TRILL-Hello message is received, RBridges compare this saved copy with the Outer.VLAN ID information associated with the received frame.

A main purpose of the disclosure is to provide a multi-port Ethernet interface device and a method for identifying the ports thereof, so as realize a multi-port Ethernet interface device to avoid waste in switch capacity and bandwidth.

According to an aspect of the invention, there is provided a method for identifying ports of a multi-port Ethernet interface device, as defined in the independent method claim 1.

According to a further aspect of the invention, there is provided a multi-port Ethernet interface device, as defined in the independent device claim 5. Preferred embodiments are defined by the dependent claims.

By modifying a message to enable a switch chip or an NP of a network device to identify ports of a multi-port Ethernet port device, the multi-port Ethernet interface device and the method for identifying ports thereof disclosed herein truly realize a multi-port Ethernet interface device and further increase the capacity of the network device.

**The present invention will be described by way of example with reference to the accompanying drawings in which:-**
Fig. 1 is a schematic diagram illustrating a flow of an embodiment of a method disclosed herein for identifying ports of a multi-port Ethernet interface device;
Fig. 2 is a schematic diagram illustrating a structure of a network device disclosed herein;
Fig. 3 is a schematic diagram illustrating a flow of acquisition of information of a switch chip or an NP involved in an embodiment of a method disclosed herein for identifying ports of a multi-port Ethernet interface device;
Fig. 4 is a schematic diagram illustrating a flow of search in a mapping table involved in an embodiment of a method disclosed herein for identifying ports of a multi-port Ethernet interface device;
Fig. 5 is a schematic diagram illustrating a structure of another embodiment of a multi-port Ethernet interface device disclosed herein;
Fig. 6 is a schematic diagram illustrating a structure of an embodiment of a multi-port Ethernet interface device disclosed herein;
Fig. 7 is a schematic diagram illustrating a structure of a first acquisition module in an embodiment of a multi-port Ethernet interface device disclosed herein;
Fig. 8 is a schematic diagram illustrating a structure of a searching unit in an embodiment of a multi-port Ethernet interface device disclosed herein; and
Fig. 9 is a schematic diagram illustrating a structure of still another embodiment of a multi-port Ethernet interface device disclosed herein.

It should be appreciated that the embodiments described herein are merely illustrative of but not to be construed as limiting the disclosure.

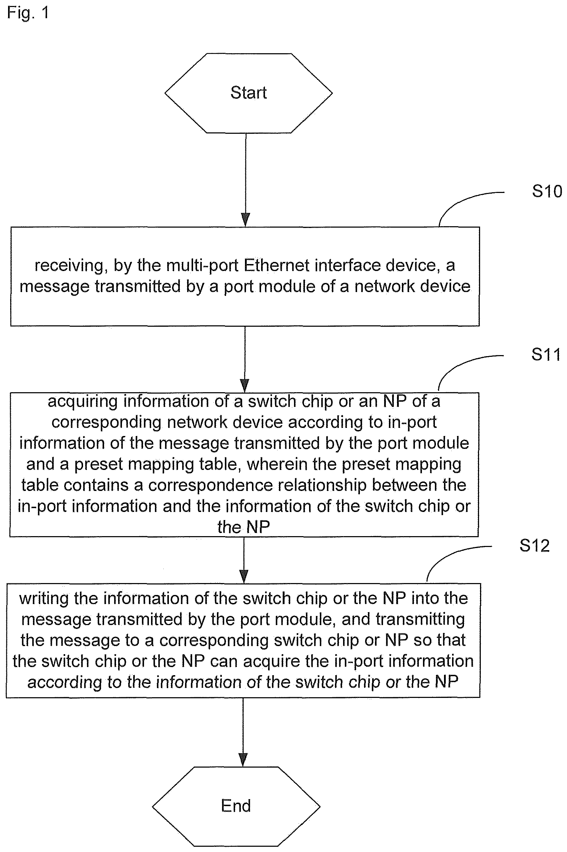

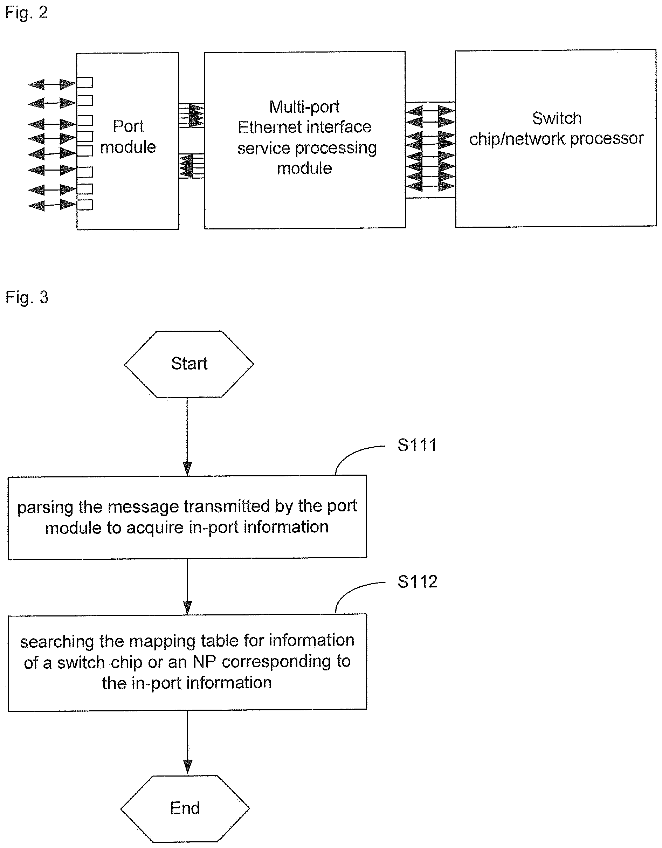

Referring to Fig. 1, an embodiment of a method for identifying ports of a multi-port Ethernet interface device disclosed herein is provided, which includes:
Step S10: a multi-port Ethernet interface device receives a message transmitted by a port module of a network device.
In the embodiment, a multi-port Ethernet interface device is added between a port module and a switch chip or an NP, the multi-port Ethernet interface device, as shown in Fig. 2, implements processing in an uplink direction from the port module to the switch chip or the NP and a downlink direction from the switch chip or the NP to the port module. In the embodiment, the method disclosed herein is illustrated by taking the processing flow which is implemented in the uplink direction and in which the multi-port Ethernet interface device receives the message transmitted by the port module of the network device as an example.

Step S11: information of a switch chip or an NP of a corresponding network device is acquired according to in-port information of the message transmitted by the port module and a preset mapping table, wherein the preset mapping table contains a correspondence relationship between the in-port information and the information of the switch chip or the NP.

Message information is parsed from the message received from the port module, and to improve message processing efficiency, a message parsing setting needs to be selectively implemented. Typically, message information includes: in-port information, DMAC, SMAC, OVLAN, IVLAN, 8021p priority, Ethertype, Ip_protocol, DIP and SIP, which are selectively parsed as needed. On the basis of the message information acquired from the message, information of a corresponding switch chip or NP is looked for according to the preset mapping table and a keyword of the mapping table; as the mapping relationship between a port and the information of the switch chip or the NP is set in the mapping table, the keyword of the mapping table should include in-port information; the setting of the keyword determines based on which message information a port or service is distinguished, however, the information of the switch chip or the NP may be, but is not limited to, VLAN information such as port 1-port 8 which correspond to VLAN 2001-VLAN 2008, respectively; and the mapping relationship in the mapping table is a one-to-one correspondence linear relationship.

Step S12: the information of the switch chip or the NP is written into the message transmitted by the port module, and the message is transmitted to a corresponding switch chip or NP so that the switch chip or the NP can acquire the in-port information according to the information of the switch chip or the NP.

After the information of a corresponding switch chip or NP is found in the mapping table, the message transmitted by the port module is modified according to the information of the switch chip or the NP. A regular addition or modification operation may be implemented for fixed positions or fields of the message according to the information of the switch chip or the NP and the write action. The regular addition or modification is the consequence of a port distinguishing as well as the ground for the switch chip or the NP to distinguish ports.

In the embodiment, by modifying the message to enable the switch chip or the NP of the network device to identify ports of the multi-port Ethernet port device, the multi-port Ethernet interface device is truly realized and the capacity of the network device is further increased.

Referring to Fig. 3, in an embodiment, step S11 may include:
Step S111: the message transmitted by the port module is parsed to acquire in-port information.

The message transmitted by the port module may be parsed to acquire information of a designated field or position of the message, thereby acquiring in-port information. Or the message may be converted in accordance with a preset rule.

Step S112: searching the mapping table for information of a switch chip or an NP corresponding to the in-port information.

As in-port information and the switch chip or the NP may be in a one-to-one correspondence linear relationship in the mapping table, information of the switch chip or the NP can be acquired by searching the mapping table using a keyword containing the in-port information.

A method of acquiring information of a switch chip or an NP according to in-port information is proposed in the embodiment.

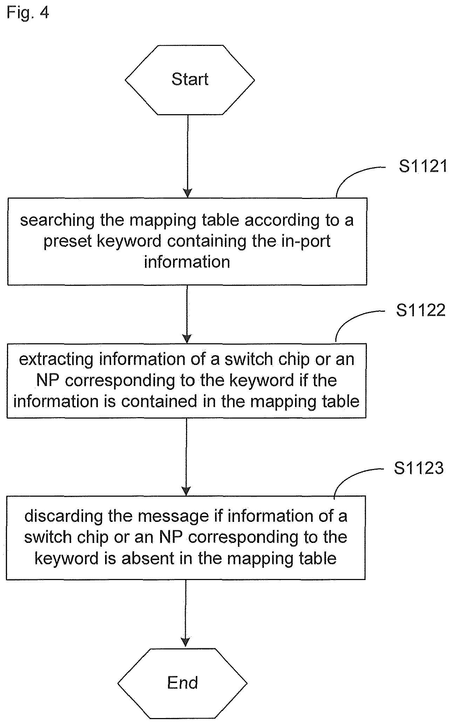

Referring to Fig. 4, in the embodiment described above, step S112 may further include:
S1121: the mapping table is searched according to a preset keyword containing the in-port information;
The keyword, as a core point of the disclosure, determines based on which message information a port or service is distinguished. To determine an out port on an uplink or a downlink, the keyword necessarily includes the in-port information.

S1122: information of a switch chip or an NP is extracted if the information of the switch chip or the NP corresponding to the keyword is contained in the mapping table.

S1123: the message is discarded if information of a switch chip or an NP corresponding to the keyword is absent in the mapping table.

If the information of the corresponding switch chip or the NP is not found in the mapping table, then a default processing is carried out to discard the message or implement a regular addition or modification operation for fixed positions or fields of the message and then transmit the message to the switch chip or the NP to be processed.

In the embodiment, a method of searching a mapping table for information of a switch chip or an NP is proposed as a preparation for the following identification on ports of a port module by a switch chip or an NP.

In the embodiment described above, step S12 specifically includes:
adding or modifying fields of the message transmitted by the port module according to a preset rule.

The regular addition or modification for the message transmitted by the port module, as another core point of the disclosure, is the consequence of a port or service distinguishing as well as the ground for the switch chip or the NP to distinguish services of the multi-port Ethernet interface device.

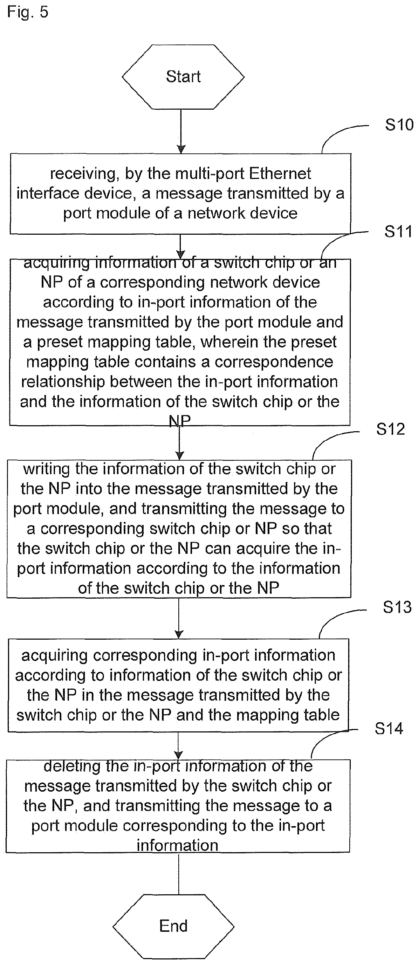

Referring to Fig. 5, another embodiment of a method for identifying ports of a multi-port Ethernet interface device disclosed herein is provided in which the method further includes:
Step S13: corresponding in-port information is acquired according to information of the switch chip or the NP in the message transmitted by the switch chip or the NP and the mapping table;
The multi-port Ethernet interface device receives the message transmitted from the switch chip or the NP, and parses information of the switch chip or the NP from the message.

The mapping table is searched by taking a keyword containing the information of the switch chip or the NP as an index.

Step S14: the in-port information of the message transmitted by the switch chip or the NP is deleted, and the message is transmitted to a port module corresponding to the in-port information.

The message transmitted by the switch chip or the NP is modified or deleted according to the rule for the message modification in an uplink direction if corresponding in-port information is found. If no corresponding in-port information is found in the mapping table, the message may be discarded by default or subjected to another processing.

It should be noted that steps S13 and S14 may be executed in synchronization with or after steps S10-S13.

In the embodiment, the message in the downlink direction is modified so that the switch chip or the NP can transmit the message to a right port of the multi-port Ethernet device.

In the embodiments described above, the same mapping table or two mapping tables consisting of an uplink table and a downlink table may be used in an uplink and a downlink direction.

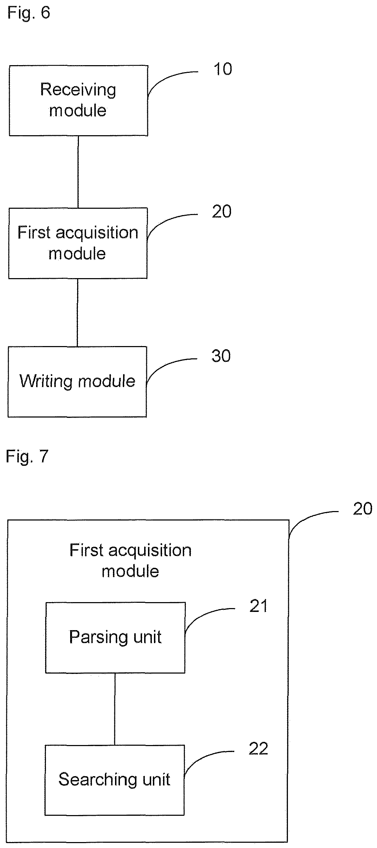

Referring to Fig. 6, an embodiment of a multi-port Ethernet device disclosed herein is proposed, which includes:
a receiving module 10 configured to receive a message transmitted by a port module of a network device;
a first acquisition module 20 configured to acquire information of a switch chip or an NP of a corresponding network device according to in-port information of the message transmitted by the port module and a preset mapping table, wherein the mapping table contains a correspondence relationship between the in-port information and the information of the switch chip or the NP;
a writing module 30 configured to write the information of the switch chip or the NP into the message transmitted by the port module, and to transmit the message to a corresponding switch chip or NP so that the switch chip or thr NP can acquire the in-port information according to the information of the switch chip or the NP.

In the embodiment, a multi-port Ethernet interface device is arranged between a port module and a switch chip or an NP, the multi-port Ethernet interface device, as shown in Fig. 2, implements processing in an uplink direction from the port module to the switch chip or the NP and a downlink direction from the switch chip or the NP to the port module. The method disclosed herein is illustrated in an embodiment by taking the processing flow in an uplink direction in the embodiment, in the method, the multi-port Ethernet interface device receives the message transmitted by the port module of the network device and parses message information from the message received from the port module, and in order to improve message processing efficiency, a message parsing setting needs to be selectively implemented. Typically, message information includes: in-port information, DMAC, SMAC, OVLAN, IVLAN, 8021p priority, Ethertype, Ip_protocol, DIP and SIP, which are selectively parsed as needed. On the basis of the message information acquired from the message, information of a corresponding switch chip or NP is looked up according to the preset mapping table and a keyword of the mapping table; as the mapping relationship between a port and the information of the switch chip or the NP is set in the mapping table, the keyword of the mapping table should contain in-port information; the setting of the keyword determines based on which message information a port or service is distinguished, and the information of the switch chip or NP may be, but not limited to, VLAN information such as port 1-port 8 which correspond to VLAN 2001-VLAN 2008, respectively; and the mapping relationship in the mapping table is a one-to-one correspondence linear relationship.

After the information of a corresponding switch chip or NP in the mapping table is found, the message transmitted by the port module is modified according to the information of the switch chip or the NP. A regular addition or modification operation may be implemented for fixed positions or fields of the message according to the information of the switch chip or the NP and a write action. The regular addition or modification is the consequence of a port distinguishing as well as the ground for the switch chip or the NP to distinguish ports.

In the embodiment, by modifying the message to enable the switch chip or the NP of the network device to identify ports of the multi-port Ethernet port device, the multi-port Ethernet interface device is truly realized and the capacity of the network device is further increased.

Referring to Fig. 7, in an embodiment, the first acquisition module 20 includes:
a parsing unit 21 configured to parse the message transmitted by the port module to acquire in-port information; and
a searching unit 22 configured to search the mapping table for information of a switch chip or NP corresponding to the in-port information.

The message transmitted by the port module may be parsed to acquire information of a designated field or position of the message, thereby acquiring the in-port information. Or the message may be converted in accordance with a preset rule.

As in-port information and the switch chip or the NP may be in a one-to-one correspondence linear relationship in the mapping table, information of the switch chip or the NP can be acquired by searching the mapping table using a keyword containing the in-port information.

In the embodiment, a method of acquiring information of a switch chip or an NP according to in-port information is proposed.

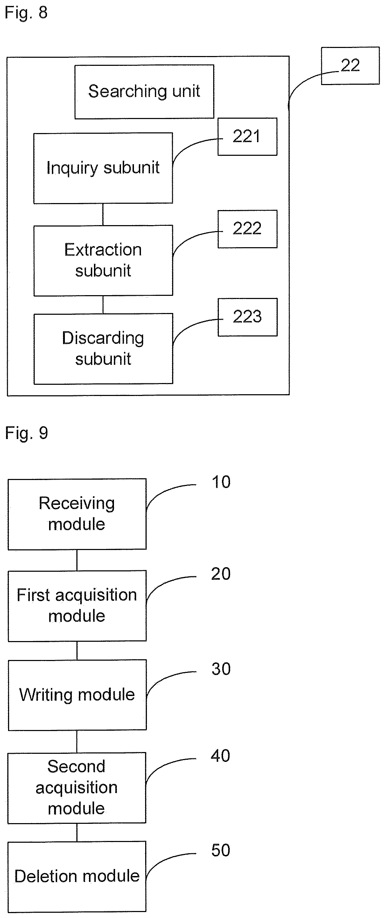

Referring to Fig. 8, in the embodiment described above, the searching unit 22 includes:
an inquiry subunit 221 configured to inquire the mapping table according to a preset keyword containing the in-port information;
an extraction subunit 222 configured to extract information of a switch chip or an NP if the information of the switch chip or the NP corresponding to the keyword is contained in the mapping table; and
a discarding subunit 223 configured to discard the message if information of a switch chip or an NP corresponding to the keyword is absent in the mapping table.

The keyword, as a core point of the disclosure, determines based on which message information a port or service is distinguished. To determine an out port on an uplink or a downlink, the keyword necessarily includes the in-port information.

If the information of the corresponding switch chip or the NP is not found in the mapping table, then a default processing is carried out to discard the message or implement a regular addition or modification operation for fixed positions or fields of the message and then transmit the message to the switch chip or the NP to be processed.

In the embodiment, a method of searching a mapping table for information of a switch chip or an NP is proposed as a preparation for the following identification on ports of a port module by a switch chip or an NP.

In the embodiment described above, the writing module 30 is specifically configured to:
add or modify fields of the message transmitted by the port module according to a preset rule.

The regular addition or modification for the message transmitted by the port module, as another core point of the disclosure, is the consequence of a port or service distinguishing as well as the ground for the switch chip or the NP to distinguish services of the multi-port Ethernet interface device.

Referring to Fig. 9, another embodiment of a multi-port Ethernet interface device is proposed, which, on the basis of the aforementioned multi-port Ethernet interface device, further includes:
a second acquisition module 40 configured to acquire corresponding in-port information according to information of the switch chip or the NP in the message transmitted by the switch chip or the NP and the mapping table; and
a deletion module 50 configured to delete the in-port information of the message transmitted by the switch chip or the NP, and to transmit the message to a port module corresponding to the in-port information.

The multi-port Ethernet interface device receives the message transmitted from the switch chip or the NP, and parses information of the switch chip or the NP from the message.

The mapping table is searched by taking a keyword containing the information of the switch chip or the NP as an index.

The message transmitted by the switch chip or the NP is modified or deleted according to the rule for the message modification in an uplink direction if corresponding in-port information is found. If no corresponding in-port information is found in the mapping table, the message may be discarded by default or subjected to another processing.

In the embodiment, the message in the downlink direction is modified so that the switch chip or the NP can transmit the message to a right port of the multi-port Ethernet device.

In the embodiments described above, the same mapping table or two mapping tables consisting of an uplink table and a downlink table may be used in an uplink and a downlink direction.

The mentioned above is only preferred embodiments of the disclosure but not limitation to the disclosure, and equivalent structures or flows devised on the basis of the description and accompanying drawings presented herein and direct or indirect applications to other related technical fields fall within the scope of the claims.

## Claims

1. A method for identifying ports of a multi-port Ethernet interface device which is added between a port module of a network device and a switch chip or a Network Processor (NP) of a network device, and the multi-port Ethernet interface device implements processing in an uplink direction from the port module to the switch chip or the NP and in a downlink direction from the switch chip or the NP to the port module, comprising:
receiving (S10), by the multi-port Ethernet interface device, a message transmitted by the port module;
parsing (S11), by the multi-port Ethernet interface device, the received message transmitted by the port module to acquire in-port information included in the received message ; and searching, by the multi-port Ethernet interface device, a preset mapping table for information of a switch chip or an NP corresponding to the in-port information; wherein the mapping table contains a correspondence relationship between the in-port information and the information of the switch chip or the NP;
writing (S12), by the multi-port Ethernet interface device, the acquired in-port information into the received message, and transmitting, by the multi-port Ethernet interface device, the written message to a corresponding switch chip or NP according to the information of the switch chip or the NP so that the corresponding switch chip or [[the]] NP can acquire the in-port information.

2. The method according to claim 1, further comprising: after the multi-port Ethernet interface device transmits the message to a corresponding switch chip or NP,
acquiring corresponding in-port information according to information of the switch chip or the NP in the message transmitted by the switch chip or the NP and the mapping table; and
deleting the in-port information of the message transmitted by the switch chip or the NP, and transmitting the message to a port module corresponding to the in-port information.

3. The method according to claim 1, wherein the searching the mapping table for information of a switch chip or an NP corresponding to the in-port information comprises:
searching the mapping table according to a preset keyword containing the in-port information;
extracting information of a switch chip or an NP when the information of the switch chip or the NP corresponding to the keyword is contained in the mapping table; and
discarding the message when the information of the switch chip or the NP corresponding to the keyword is absent in the mapping table.

4. The method according to claim 1 or 2, wherein the writing the information of the switch chip or the NP into the message received by the multi-port Ethernet interface device comprises:
adding or modifying fields of the message received by the multi-port Ethernet interface device according to a preset rule.

5. A multi-port Ethernet interface device, which is added between a port module of a network device and a switch chip or a Network Processor (NP) of a network device, and implements processing in an uplink direction from the port module to the switch chip or the NP and in a downlink direction from the switch chip or the NP to the port module, comprising: a receiving module (10), a first acquisition module (20) and a writing module (30), wherein
the receiving module configured to receive a message transmitted by the port module;
the first acquisition module configured to acquire information of a switch chip or a Network Processor (NP) according to in-port information of the message received by the receiving module and a preset mapping table, wherein the mapping table contains a correspondence relationship between the in-port information and the information of the switch chip or the NP; wherein the first acquisition module comprises: a parsing unit (21) and a searching unit (22), wherein the parsing unit configured to parse the received message transmitted by the port module to acquire the in-port information; and the searching unit configured to search the mapping table for the information of the switch chip or the NP corresponding to the in-port information; and
the writing module configured to write the acquired in-port information into the received message, and to transmit the written message to a corresponding switch chip or NP according to the information of the switch chip or the NP so that the corresponding switch chip or NP can acquire the in-port information.

6. The device according to claim 5, further comprising: a second acquisition module and a deletion module, wherein
the second acquisition module configured to acquire corresponding in-port information according to information of the switch chip or the NP in the message transmitted by the switch chip or the NP and the mapping table; and
the deletion module configured to delete the in-port information of the message transmitted by the switch chip or the NP, and to transmit the message to a port module corresponding to the in-port information.

7. The device according to claim 5 or 6, wherein the searching module comprises:
an inquiry subunit, an extraction subunit and a discharging subunit, wherein
the inquiry subunit configured to inquire the mapping table according to a preset keyword containing the in-port information;
the extraction subunit configured to extract information of a switch chip or an NP when the information of the switch chip or the NP corresponding to the keyword is contained in the mapping table; and
the discarding subunit configured to discard the message when the information of the switch chip or the NP corresponding to the keyword is absent in the mapping table.

8. The device according to claim 5 or 6, wherein the writing module is specifically configured to add or modify fields of the message received by the multi-port Ethernet interface device according to a preset rule.

## Patentansprüche

1. Verfahren zum Identifizieren von Ports einer Multiport-Ethernet-Schnittstellenvorrichtung, die zwischen einem Port-Modul einer Netzwerkvorrichtung und einem Schalterchip oder einem Netzwerkprozessor (NP) einer Netzwerkvorrichtung eingefügt ist, und die Multiport-Ethernet-Schnittstellenvorrichtung implementiert eine Verarbeitung in einer Aufwärtsrichtung von dem Port-Modul zu dem Schalterchip oder dem NP und in einer Abwärtsrichtung von dem Schalterchip oder dem NP zu dem Port-Modul, umfassend:
Empfangen (S10) durch die Multiport-Ethernet-Schnittstellenvorrichtung einer Nachricht, die von dem Port-Modul übertragen wird;
Parsen (S11) durch die Multiport-Ethernet-Schnittstellenvorrichtung der empfangenen Nachricht, die von dem Port-Modul übertragen wird, um In-Port-Informationen, die in der empfangenen Nachricht enthalten sind, zu erfassen; und
Durchsuchen durch die Multiport-Ethernet-Schnittstellenvorrichtung einer vorgegebenen Zuordnungstabelle nach Informationen eines Schalterchips oder eines NP, die den In-Port-Informationen entsprechen; wobei die Zuordnungstabelle ein Entsprechungsverhältnis zwischen den In-Port-Informationen und den Informationen des Schalterchips oder des NP enthält;
Schreiben (S12) durch die Multiport-Ethernet-Schnittstellenvorrichtung der erfassten In-Port-Informationen in die empfangene Nachricht und Übertragen durch die Multiport-Ethernet-Schnittstellenvorrichtung der geschriebenen Nachricht an einen entsprechenden Schalterchip oder NP gemäß den Informationen des Schalterchips oder des NP, sodass der entsprechende Schalterchip oder [[der]] NP die In-Port-Informationen erfassen kann.

2. Verfahren nach Anspruch 1, ferner umfassend: nachdem die Multiport-Ethernet-Schnittstellenvorrichtung die Nachricht an einen entsprechenden Schalterchip oder NP überträgt,
Erfassen entsprechender In-Port-Informationen gemäß Informationen des Schalterchips oder des NP in der Nachricht, die von dem Schalterchip oder dem NP übertragen wird, und der Zuordnungstabelle; und
Löschen der In-Port-Informationen der Nachricht, die von dem Schalterchip oder dem NP übertragen wird, und Übertragen der Nachricht an ein Port-Modul, die den In-Port-Informationen entspricht.

3. Verfahren nach Anspruch 1,
wobei das Durchsuchen der Zuordnungstabelle nach Informationen eines Schalterchips oder eines NP, die den In-Port-Informationen entsprechen, Folgendes umfasst:
Durchsuchen der Zuordnungstabelle gemäß einem vorgegebenen Schlüsselwort, das die In-Port-Informationen enthält;
Entnehmen von Informationen eines Schalterchips oder eines NP, wenn die Informationen des Schalterchips oder des NP, die dem Schlüsselwort entsprechen, in der Zuordnungstabelle enthalten sind; und
Verwerfen der Nachricht, wenn die Informationen des Schalterchips oder des NP, die dem Schlüsselwort entsprechen, in der Zuordnungstabelle nicht vorhanden sind.

4. Verfahren nach Anspruch 1 oder 2, wobei das Schreiben der Informationen des Schalterchips oder des NP in die Nachricht, die durch die Multiport-Ethernet-Schnittstellenvorrichtung empfangen wird, Folgendes umfasst:
Hinzufügen oder Ändern von Feldern der Nachricht, die durch die Multiport-Ethernet-Schnittstellenvorrichtung empfangen wird, gemäß einer vorgegebenen Regel.

5. Multiport-Ethernet-Schnittstellenvorrichtung, die zwischen einem Port-Modul einer Netzwerkvorrichtung und einem Schalterchip oder einem Netzwerkprozessor (NP) einer Netzwerkvorrichtung eingefügt ist, und eine Verarbeitung in einer Aufwärtsrichtung von dem Port-Modul zu dem Schalterchip oder dem NP und in einer Abwärtsrichtung von dem Schalterchip oder dem NP zu dem Port-Modul implementiert, umfassend:
ein Empfangsmodul (10),
ein erstes Erfassungsmodul (20) und
ein Schreibmodul (30),
wobei
das Empfangsmodul konfiguriert ist, um eine Nachricht, die von dem Port-Modul übertragen wird, zu empfangen;
das erste Erfassungsmodul konfiguriert ist, um Informationen eines Schalterchips oder eines Netzwerkprozessors (NP) gemäß In-Port-Informationen der Nachricht, die von dem Empfangsmodul empfangen wird, und einer vorgegebenen Zuordnungstabelle zu erfassen, wobei die Zuordnungstabelle ein Entsprechungsverhältnis zwischen den In-Port-Informationen und den Informationen des Schalterchips oder des NP enthält; wobei das erste Erfassungsmodul Folgendes umfasst:
eine Parsereinheit (21) und eine Sucheinheit (22),
wobei die Parsereinheit konfiguriert ist, um die empfangene Nachricht, die von dem Port-Modul übertragen wird, zu parsen, um die In-Port-Informationen zu erfassen; und die Sucheinheit konfiguriert ist, um die Zuordnungstabelle nach den Informationen des Schalterchips oder des NP, die den In-Port-Informationen entsprechen, zu durchsuchen; und
das Schreibmodul konfiguriert ist, um die erfassten In-Port-Informationen in die empfangene Nachricht zu schreiben und um die geschriebene Nachricht an einen entsprechenden Schalterchip oder NP gemäß den Informationen des Schalterchips oder des NP zu übertragen, sodass der entsprechende Schalterchip oder NP die In-Port-Informationen erfassen kann.

6. Vorrichtung nach Anspruch 5, ferner umfassend: ein zweites Erfassungsmodul und ein Löschmodul, wobei
das zweite Erfassungsmodul konfiguriert ist, um entsprechende In-Port-Informationen gemäß Informationen des Schalterchips oder des NP in der Nachricht, die von dem Schalterchip oder dem NP übertragen wird, und der Zuordnungstabelle zu erfassen; und
das Löschmodul konfiguriert ist, um die In-Port-Informationen der Nachricht, die von dem Schalterchip oder dem NP übertragen wird, zu löschen und um die Nachricht an ein Port-Modul, die den In-Port-Informationen entspricht, zu übertragen.

7. Vorrichtung nach Anspruch 5 oder 6, wobei das Suchmodul Folgendes umfasst: eine Abfrage-Untereinheit, eine Entnahme-Untereinheit und eine Ausgabe-Untereinheit, wobei
die Abfrage-Untereinheit konfiguriert ist, um die Zuordnungstabelle gemäß einem vorgegebenen Schlüsselwort, das die In-Port-Informationen enthält, abzufragen;
die Entnahme-Untereinheit konfiguriert ist, um Informationen eines Schalterchips oder eines NP zu entnehmen, wenn die Informationen des Schalterchips oder des NP, die dem Schlüsselwort entsprechen, in der Zuordnungstabelle enthalten sind; und
die Verwerfung-Untereinheit konfiguriert ist, um die Nachricht zu verwerfen, wenn die Informationen des Schalterchips oder des NP, die dem Schlüsselwort entsprechen, nicht in der Zuordnungstabelle vorhanden sind.

8. Vorrichtung nach Anspruch 5 oder 6, wobei das Schreibmodul spezifisch konfiguriert ist, um Felder der Nachricht, die durch die Multiport-Ethernet-Schnittstellenvorrichtung empfangen wird, gemäß einer vorgegebenen Regel hinzuzufügen oder zu ändern.

## Revendications

1. Procédé d'identification de ports d'un dispositif d'interface Éthernet multiport qui est ajouté entre un module de port d'un dispositif de réseau et une puce de commutation ou un processeur de réseau (NP) d'un dispositif de réseau, et le dispositif d'interface Éthernet multiport met en oeuvre le traitement dans le sens d'une liaison montante du module de port à la puce de commutation ou au NP et dans le sens d'une liaison descendante de la puce de commutation ou du NP au module de port, comprenant :
la réception (S10), par le dispositif d'interface Éthernet multiport, d'un message transmis par le module de port ;
l'analyse (S11), par le dispositif d'interface Éthernet multiport, du message reçu transmis par le module de port pour acquérir des informations de port d'entrée comprises dans le message reçu ; et
la recherche, par le dispositif d'interface Éthernet multiport, d'une table de correspondance prédéfinie pour des informations d'une puce de commutation ou d'un NP correspondant aux informations de port d'entrée ; la table de correspondance contenant une relation de correspondance entre les informations de port d'entrée et les informations de la puce de commutation ou du NP ;
l'écriture (S12), par le dispositif d'interface Éthernet multiport, des informations de port d'entrée acquises dans le message reçu, et la transmission, par le dispositif d'interface Éthernet multiport, du message écrit à une puce de commutation correspondante ou un NP correspondant en fonction des informations de la puce de commutation ou du NP de manière que la puce de commutation correspondante ou [[le]] NP peut acquérir les informations de port d'entrée.

2. Procédé selon la revendication 1, comprenant en outre : après que le dispositif d'interface Éthernet multiport a transmis le message à une puce de commutation correspondante ou un NP correspondant,
l'acquisition d'informations de port d'entrée correspondantes en fonction d'informations de la puce de commutation ou du NP dans le message transmis par la puce de commutation ou le NP et la table de correspondance ; et
la suppression des informations de port d'entrée du message transmis par la puce de commutation ou le NP et la transmission du message au module de port correspondant aux informations de port d'entrée.

3. Procédé selon la revendication 1,
dans lequel la recherche de la table de correspondance pour des informations d'une puce de commutation ou d'un NP correspondant aux informations de port d'entrée comprend
la recherche de la table de correspondance en fonction d'un mot clé prédéfini contenant les informations de port d'entrée ;
l'extraction d'informations d'une puce de commutation ou d'un NP lorsque les informations de la puce de commutation ou du NP correspondant au mot clé sont contenues dans la table de correspondance ; et
le rejet du message lorsque les informations de la puce de commutation ou du NP correspondant au mot clé sont absentes dans la table de correspondance.

4. Procédé selon la revendication 1 ou 2, dans lequel l'écriture des informations de la puce de commutation ou du NP dans le message reçu par le dispositif d'interface Éthernet multiport comprend :
l'ajout ou la modification de champs du message reçu par le dispositif d'interface Éthernet multiport en fonction d'une règle prédéfinie.

5. Dispositif d'interface Éthernet multiport, qui est ajouté entre un module de port d'un dispositif de réseau et une puce de commutation ou un processeur de réseau (NP) d'un dispositif de réseau, et met en oeuvre le traitement dans le sens d'une liaison montante du module de port à la puce de commutation ou au NP et dans le sens d'une liaison descendante de la puce de commutation ou du NP au module de port, comprenant :
un module de réception (10),
un premier module d'acquisition (20) et
un module d'écriture (30),
le module de réception conçu pour recevoir un message transmis par le module de port ;
le premier module d'acquisition conçu pour acquérir des informations d'une puce de commutation ou d'un processeur de réseau (NP) en fonction d'informations de port d'entrée du message reçu par le module de réception et d'une table de correspondance prédéfinie, la table de correspondance contenant une relation de correspondance entre les informations de port d'entrée et les informations de la puce de commutation ou du NP ; le premier module d'acquisition comprenant :
une unité d'analyse (21) et une unité de recherche (22),
l'unité d'analyse conçue pour analyser le message reçu transmis par le module de port pour acquérir les informations de port d'entrée ; et l'unité de recherche conçue pour rechercher la table de correspondance pour les informations de la puce de commutation ou du NP correspondant aux informations de port d'entrée ; et
le module d'écriture conçu pour écrire les informations de port d'entrée acquises dans le message reçu, et pour transmettre le message écrit à une puce de commutation correspondante ou un NP correspondant en fonction des informations de la puce de commutation ou du NP de manière que la puce de commutation correspondante ou le NP peut acquérir les informations de port d'entrée.

6. Dispositif selon la revendication 5, comprenant en outre : un deuxième module d'acquisition et un module de suppression,
le deuxième module d'acquisition conçu pour acquérir des informations de port d'entrée correspondantes en fonction d'informations de la puce de commutation ou du NP dans le message transmis par la puce de commutation ou le NP et de la table de correspondance ; et
le module de suppression conçu pour supprimer les informations de port d'entrée du message transmis par la puce de commutation ou le NP, et pour transmettre le message à un module de port correspondant aux informations de port d'entrée.

7. Dispositif selon la revendication 5 ou 6, dans lequel le module de recherche comprend : une sous-unité de demande d'informations, une sous-unité d'extraction et une sous-unité de décharge,
la sous-unité de demande d'informations conçue pour interroger la table de correspondance en fonction d'un mot clé prédéfini contenant les informations de port d'entrée ;
la sous-unité d'extraction conçue pour extraire des informations d'une puce de commutation ou d'un NP lorsque les informations de la puce de commutation ou du NP correspondant au mot clé sont contenues dans la table de correspondance ; et
la sous-unité de rejet conçue pour rejeter le message lorsque les informations de la puce de commutation ou du NP correspondant au mot clé sont absentes dans la table de correspondance.

8. Dispositif selon la revendication 5 ou 6, dans lequel le module d'écriture est spécifiquement conçu pour ajouter ou modifier des champs du message reçu par le dispositif d'interface Éthernet multiport en fonction d'une règle prédéfinie.
